# EUROPEAN PATENT SPECIFICATION

(11) **EP 2 230 924 B1**
(45) Date of publication and mention of the grant of the patent: **15.07.2015**
(21) Application number: 08867444.5
(22) Date of filing: 18.12.2008
(51) Int. Cl.: A23D 9/00, A23L 1/30, A23L 2/02, A23L 2/52, A23L 1/22

(54) **FOOD PRODUCT INCLUDING ONE OR MORE OMEGA-3 FATTY ACIDS AND ONE OR MORE FRUIT FLAVORS**
LEBENSMITTELPRODUKT, DAS EINE ODER MEHRERE OMEGA-3-FETTSÄUREN UND EINEN ODER MEHRERE FRUCHTGESCHMACKSSTOFFE ENTHÄLT
PRODUIT ALIMENTAIRE COMPRENANT UN OU PLUSIEURS ACIDES GRAS OMÉGA-3 ET UN OU PLUSIEURS ARÔMES DE FRUIT

(30) Priority: 21.12.2007 US 962388
(43) Date of publication of application: 29.09.2010
(73) Proprietor: TROPICANA PRODUCTS, INC., Bradenton, FL 34208 (US)
(72) Inventor: RIVERA, Teodoro, Algonquin IL 60102 (US); SHIELDS, Nicholas, C., Carpentersville IL 60110 (US); IBRAHIM, Amenah, I., Chicago IL 60625 (US); HITCHCOCK, Bryan, W., Vernon Hills IL 60061 (US); GIVEN, Peter, S., Ridgefield CT 06877 (US)
(74) Representative: Duxbury, Stephen
(86) International application number: PCT/US2008/087372
(87) International publication number: WO 2009/085921

(56) References cited:
- EP-A- 0 713 653
- EP-A- 1 702 675
- WO-A-01/47377
- WO-A-03/003849
- WO-A-2007/124993
- US-A- 6 103 755

## Description

### PRIORITY CLAIM

This application claims priority to U.S. Utility Application Serial, No. 11/962,388, filed December 21, 2007 and entitled, *Food Product Including One or More Omega-3 Fatty Acids and One or More Fruit Flavors* (Attorney Docket No. 006943.00988), the entire disclosure of which is hereby incorporated by reference.

### FIELD OF INVENTION

The present invention relates generally to food products and, more specifically, to food products fortified with one or more omega-3 fatty acids and a supplementary amount of one or more fruit flavors.

### BACKGROUND OF THE INVENTION

Two families of fatty acids, the omega-3 and the omega-6 fatty acids, form an important part of the human diet. Referred to as "essential fatty acids," they constitute important components of cell membranes, regulate the body's use of cholesterol, and control the production of substances that affect nearly all other bodily processes. For example, eicosapentaenoic acid (EPA) and docosahexaenoic acid (DHA), long-chain forms of omega-3 fatty acids, support brain and cardiovascular health and functions, amongst other health benefits.

To achieve the best effect, the two families of fatty acids should be combined in the right proportions. Unlike omega-6 fatty acids, which are found in plant or vegetable oils and form a common part of a modern-day diet, both EPA and DHA are found almost exclusively in deep, cold water fish. The fact that omega-6 is more readily available than omega-3 has resulted in most people consuming a disproportionately low amount of omega-3 fatty acids. To increase or optimize health benefits from the essential fatty acids, it has been suggested that consumption of omega-3 fatty acids be increased, while that of omega-6 fatty acids be reduced.

Accordingly, it is desirable to make omega-3 fatty acids, particularly long-chain forms, more readily available in consumer food products. One way to make omega-3 , fatty acids more readily available is to include them in food products, such as, for example, in beverages such as juices. Juices containing fish sources of omega-3 fatty acids have an undesirable flavor, however. It is an object of the present invention to solve the problem of food products having one or more undesirable flavors.

Patent documents WO 01/47377, US 6 103 755, EP 1 702 675, EP 0 713 653, WO 03/003849 describe food products containing omega-3 fatty acids, a fruit juice and a fruit flavor.

### SUMMARY OF THE INVENTION

The present invention relates to food products that promote health benefits, for example, a beverage fortified with one or more omega-3 fatty acids and a supplemental amount of one or more fruit flavors. The food product can include a fruit juice. In certain exemplary embodiments, the fruit juice is derived from citrus fruits, including, but not limited to, orange, mandarin orange, tangerine, tangelo, pomelo, lemon, lime, grapefruit and any combination of them. In certain exemplary embodiments, the fruit juice is derived from non-citrus fruits, including, but not limited to, apple, peach, nectarine, plum, prune, pineapple, banana, pomegranate, blackberry, blueberry, boysenberry, cherry, cranberry, currant, date, grape, gooseberry, huckleberry, mulberry, raspberry, strawberry, and any combination of them. In certain exemplary embodiments, the food product includes a mixture of citrus and non-citrus juices. The food product can include, for example, a not-from-concentrate (NFC) juice (e.g. NFC orange juice). The food product can also include from-concentrate (FC) juices and other types of citrus or non-citrus juices, for example, 100% juices (e.g., apple and grape) and 1% to 90% juice cocktails (e.g., cranberry and grapefruit).

Other food products include, for example, dairy drinks, energy drinks, sports drinks, fortified/enhanced water drinks, soy drinks, fermented drinks (e.g., yogurt and kefir), carbonated drinks, hybrid mixtures of juice and dairy drinks and the like, including both bottle and can products and fountain syrup applications. In addition, fortifying foods and beverages with omega-3 fatty acids is more convenient and fitting with modem lifestyles, as opposed to occasionally preparing and consuming fish.

In at least certain exemplary embodiments, the methods and food products disclosed here are based in part on the discovery of novel combinations of food products, such as, for example, juices, including one or more omega-3 fatty acids that have desirable flavor. It has been discovered that the presence of omega-3 fatty acids can attenuate, mask and/or reduce high note flavors of food products, such as, for example, juices. It has surprisingly been discovered that the addition of a supplemental amount of one or more fruit flavors to a food product having one or more omega-3 fatty acids can produce a food product having desirable high note flavors. Accordingly, in at least certain exemplary embodiments, juices including at least one or more omega-3 fatty acids and a supplemental amount of one or more fruit flavors are provided. In other exemplary embodiments, particularly desirable high note flavors can be achieved by providing fruit juices including at least one or more omega-3 fatty acids and a supplemental amount of one or more fruit flavors from the same fruits as the fruit juices.

In accordance with certain aspects, a food product including at least a fruit juice, at least one omega-3 fatty acid, and a supplemental amount of at least one fruit flavor is provided. In certain exemplary embodiments, the fruit juice is an NFC juice, such as, for example, NFC orange juice. In certain exemplary embodiments, the NFC juice is pasteurized. In certain exemplary embodiments, the at least one fruit flavor is selected from one or more of an orange fraction, an orange component, an orange extract, an orange essential oil, an orange folded essential oil, an orange aroma, an orange essence and an orange from the named fruit flavor. In certain exemplary embodiments, the at least one fruit flavor is present in an amount of approximately about 0.001% to about 1.0% by weight, or in an amount of approximately about 0.01% to about 0.5% by weight. In certain exemplary embodiments, the fruit juice, the at least one omega-3 fatty acid and the at least one fruit flavor are present as a substantially homogeneous blend. In certain exemplary embodiments, the desired amount of the at least one omega-3 fatty acid comprises about 5-5000 milligrams per 8 ounce serving of the NFC juice, between about 10 mg and about 1000 mg per 8 ounce serving of the NFC juice, or at least about 16 milligrams per 8 ounce serving of the NFC juice. In certain exemplary embodiments, the at least one omega-3 fatty acid comprises one or both of eicosapentaenoic acid (EPA) and docosahexaenoic acid (DHA). In certain exemplary embodiments, the at least one omega-3 fatty acid comprises both EPA and DHA in amounts of 55-65% EPA and 35-45% DHA, or in a ratio of about 60% EPA and about 40% DHA. In certain exemplary embodiments, the NFC juice comprises one or both of a citrus juice and a non-citrus juice.

In certain exemplary embodiments, the at least, one omega-3 fatty acid is encapsulated. In certain exemplary embodiments, the at least one encapsulated omega-3 fatty acid is multi-encapsulated. In certain exemplary embodiments, the at least one multi-encapsulated omega-3 fatty acid remains substantially intact upon pasteurization. In certain exemplary embodiments, the at least one multi-encapsulated omega-3 fatty acid remains substantially intact at a pH of less than about 6.0 or remains substantially intact at a pH of between about 3.6 and 4.2. In certain exemplary embodiments, the at least one multi-encapsulated omega-3 fatty acid remains substantially intact when exposed to shear at a shear rate of between about 1 sec⁻¹ and about 100,000 sec⁻¹.

These and other objects, along with advantages and features of the present invention herein disclosed, will become apparent through reference to the following description and the accompanying drawing. Furthermore, it is to be understood that the features of the various embodiments described herein are not mutually exclusive and can exist in various combinations and permutations.

### BRIEF DESCRIPTION OF THE DRAWLING

In the drawing, like reference characters generally refer to the same parts throughout the different views. Also, the drawing is not necessarily to scale, emphasis instead generally being placed upon illustrating the principles of the invention. In the following description, various embodiments of the present invention are described with reference to the following drawing, in which:

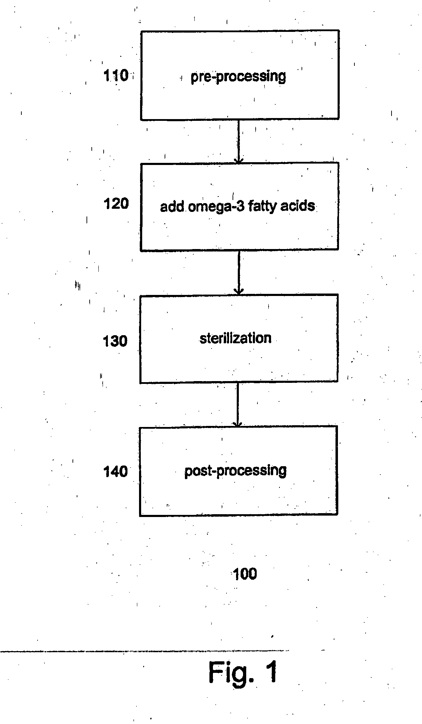

***Figure 1*** depicts a process for forming a food product in accordance with certain exemplary embodiments.

### DETAILED DESCRIPTION OF CERTAIN EXEMPLARY EMBODIMENTS

The invention relates to a food product containing one or more omega-3 fatty acids and a supplemental amount of one or more fruit flavors. In certain exemplary embodiments, the food product comprises a liquid beverage. In certain exemplary embodiments, the liquid beverage comprises orange juice. The orange juice, for example, is a not-from-concentrate (NFC) orange juice. Food products comprising other types of beverages or juices, such as citrus, non-citrus, from-concentrate (FC), and NFC, or others are also contemplated and within the scope of the invention. In certain exemplary embodiments, the food product includes a fruit juice derived from citrus fruits including, but not limited to, orange, mandarin orange, tangerine, tangelo, pomelo, lemon, lime, grapefruit and any combination of them. In certain exemplary embodiments, the fruit juice is derived from a non-citrus fruit including, but not limited to, apple, peach, nectarine, plum, prune, pineapple, banana, pomegranate, berry (e.g., Barbados cherry (acerola cherry), bearberry, blackberry, blueberry, boysenberry, cherry, choke cherry, cloudberry, cranberry, currant, date, dewberry, elderberry, grape, gooseberry, huckleberry, loganberry, olallieberry, mulberry, raisin, plains berry, prairie berry, raspberry, Saskatoon berry, salmonberry, Seabuckthorn berry, sloe berry, strawberry, thimbleberry, Thornberry, wineberry, whortleberry and the like) and any combination of them. In certain exemplary embodiments, the food product includes a mixture of citrus and non-citrus fruit juices. In certain exemplary embodiments, the food product is a beverage that comprises at least one fruit juice (e.g., citrus juice, orange juice, any of the juices disclosed herein) in an amount from about 5% to about 90% by weight of the beverage, e.g., about 10% to about 75% by weight, about 15% to about 50% by weight, or about 20% to about 36% by weight. The food product could be in liquid form or non-liquid form. For example, the food product could be provide as a ready to drink beverage or in dry form for reconstituting with a liquid, such as water, for drinking. Additionally, the food product could be yogurt, oatmeal, cereal, cheese, pudding, rice cakes, snack bars, or other types of hand-held, non-refrigerated food products or any combination thereof.

As used herein, the term "food product" refers to both a consumer-ready version of a food (e.g., a food product that is ready for consumption, sale, shipment, packaging and the like) as well as a "raw" version of a food, such as, for example, freshly pressed juice. The term food product also refers to intermediate food products as describe further here (e.g., a freshly pressed juice that has optionally undergone,one or more manipulations), such as,'for example, an NFC and/or FC fruit juice, an NFC and/or FC fruit juice to which one or more omega-3 fatty acids and/or one or more fruit flavors has been added, a mixed NFC and/or FC fruit juice, a post-processed NFC and/or FC fruit juice, a pasteurized NFC and/or FC fruit juice and the like.

In certain exemplary embodiments, the food product is a reduced-calorie, light, or low-calorie beverage. As used herein, "reduced calorie beverage" means a beverage having at least a 25% reduction in calories per 8 oz. serving of beverage as compared to the full calorie version, typically a previously commercialized full-calorie version. As used herein, a "light beverage" means a beverage having at least 1/3 less calories per 8 oz. serving of beverage as compared to the full calorie version, typically a previously commercialized full-calorie version. As used herein, a "low-calorie beverage" has fewer than 40 calories per 8 oz. serving of beverage. In certain exemplary embodiments, the food product of invention is a light orange juice beverage having less than 50 calories per 8 oz. serving.

Various sweeteners may be included in the formulations of the food products disclosed herein. Sweeteners suitable for use in various juice beverage embodiments of the food products disclosed here include natural sweeteners. Natural sweeteners suitable for at least certain exemplary embodiments include, for example, erythritol, tagatose, sorbitol, mannitol, xylitol, maltose, rhamnose, trehalose, glycyrrhizin, malitol, lactose, Lo Han Guo ("LHG"), rebaudiosides, steviol glycosides; xylose, arabinose, isomalt, lactitol, maltitol, and ribose, and protein sweeteners such as thaumatin, monellin, brazzein, and monatin. Natural non-nutritive sweeteners suitable for some or all embodiments of the reduced calorie, light, or low-calorie juice beverages disclosed here include, for example, rebaudioside A, stevioside, other steviol glycolsides, *Stevia rebaudiana* extracts, Lo Han Guo, e.g., LHG juice concentrate or LHG powder having a mogroside V content of from about 2 to about 99%, monatin, glycyrrhizin, thaumatin, monelline, brazzein, and mixtures of any of them.

As used herein, the term "supplemental amount" refers to an amount of fruit flavor that is added to a food product described herein in addition to the fruit flavor that is typically found in the food product. For example, a supplemental amount of orange flavor is an amount of orange flavor that is greater than that which is typically present in orange juice obtained by an NFC process routinely used in the art. The supplemental amount can be greater than the amount typically found in one or more of the consumer ready version of the food, the raw version of the food, an intermediate food product or any combination thereof.

In certain exemplary embodiments, omega-3 fatty acids comprise the long-chain omega-3 fatty acids eicosapentaenoic acid (EPA) and docosahexaenoic acid (DHA). The long-chain omega-3 fatty acids are derived from, for example, marine or fish oils. Such oils can be extracted from various types of fish or marine animals, such as anchovies, capelin, cod, herring, mackerel, menhaden, salmon, sardines, shark and tuna, or from marine vegetation, such as micro-algae, or any combination thereof. Other sources of omega-3 fatty acids include liver and brain tissue and eggs.

The ratio of EPA to DHA in the food product may vary depending on the source of the omega-3 fatty acids (e.g., fish oils), the manner in which the omega-3 fatty acids are mixed, and the food product to be produced (e.g., orange juice). The EPA:DHA ratio will vary to suit a particular application and can include, for example, 0:100, 100:0, 2:1, or 3:2. In certain exemplary embodiments, the mixture of omega-3 fatty acids comprises about 55-65% EPA and about 35-45% DHA. In certain exemplary embodiments, the EPA:DHA ratio is about 60:40; however, other ratios are contemplated and within the scope of the invention.

In certain exemplary embodiments, the one or more omega-3 fatty acids are added to the product (such as, e.g., orange juice) in a powdered form and/or as a free oil in a liquid form. Additionally, the one or more omega-3 fatty acids could be supplied in a gel form or as part of an emulsion with other types of carriers. Various types of powdered omega-3 fatty acids can be used. In certain exemplary embodiments, the powdered form includes powdered omega-3 fatty acids prepared by spray-drying the fish oils into an encapsulation matrix comprising, for example, a protein and a carbohydrate. The matrix encapsulates the fish oils, forming microcapsules in the range of about 1 - 500 microns. In certain exemplary embodiments, the encapsulate size range is about 5 - 100 microns. Additional ranges include about 0.5 to 20 microns. The particle size will be vary as necessary to suit a particular application and may be selected based on desired mouthfeel, visual appearance (hazy, cloudy, or opaque), oxidation stability, and suspension stability within the product. Encapsulated and multi-encapsulated fish oils include, for example, Meg-3^{®} from Ocean Nutrition Canada. Encapsulated fish oils are advantageous, since the microcapsules can effectively protect the omega-3 fatty acids from stresses encountered due to oxidation of fatty acids during processing, such as, shear mixing, high temperature processing, and during subsequent storage and can eliminate or reduce a fishy taste upon ingestion. Exemplary suitable encapsulated and multi-encapsulated fish oils and their methods of manufacture are described in U.S. Patent No. 6,969,530.

In certain exemplary embodiments, a desired amount of omega-3 fatty acids is provided to the food products described here. The amount may vary depending on the application and nutritional content desired. In certain exemplary embodiments, orange juice comprises about 5-5000 mg of omega-3 fatty acids per 8 fluid ounce serving size, (0.24 litters). The amount to be added will vary to suit a particular application and can be based, at least in part, on nutritional value, taste, shelf life, efficacy levels approved, qualified health claims; and combinations thereof. Other amounts are also contemplated and within the scope of the invention, such as between about 10 mg and about 1000 mg per 8 ounce, serving. For example, it may be desired to provide at least 32 mg of omega-3 fatty acids (combined EPA and DHA) per serving of the food product to meet the United States Food and Drug Administration (FDA) excellent source nutrient content claim requirements, or at least 16 mg to meet the FDA good source nutrient content claim requirements. The omega-3 fatty acids are sufficiently mixed in the food product to provide a relatively uniform distribution; however, mixing is not limited to dissolving or suspending the omega-3 fatty acids in a liquid. For example, the omega-3 fatty acids may be mixed in powder form with a powdered drink mix (e.g., Gatorade^{®} from PepsiCo) to form a substantially evenly blended powdered product.

In certain exemplary embodiments, a desired amount of one or more fruit flavors is provided to the food products described here. As used herein, the term "fruit flavor" refers to any fruit fraction, fruit component (e.g., rind, zest, pith, pericarp, pulp, flower (e.g., petals), leaf, stem, seed, and the like), from the named fruit (FTNF) flavor (e.g., a combination of fruit essence, fruit oil and/or fruit flavor, such as, e.g., an orange from the named fruit flavor), fruit extract (e.g., expressed, absorbed, macerated, distilled and the like), fruit oil (e.g., essential oil, folded essential oil), fruit essence, fruit puree, fruit aroma and the like that can be added to a food produet to enhance flavor (e.g to provide and/or enhance one or more high note flavors). In certain exemplary embodiments, one or more orange fruit flavors are used. In certain exemplary embodiments, the orange flavor includes one or more of an orange fraction, an orange component, an orange FTNF flavor, an orange extract, an orange essential oil, an orange folded essential oil, an orange essence and any combination thereof.

In certain exemplary embodiments, fruit flavors are derived from non-citrus fruits such as, for example, apple, peach, nectarine, plum, prune, pineapple, banana, pomegranate, berry (e.g., Barbados cherry (acerola cherry), bearberry, blackberry, blueberry, boysenberry, cherry, choke cherry, cloudberry, cranberry, current, date, dewberry, elderberry, grape, gooseberry, huckleberry, loganberry, olallieberry, mulberry, raisin, plains berry, prairie berry, raspberry, Saskatoon berry, salmonberry, Seabuckthom berry, sloe berry, strawberry, thimbleberry, Thornberry, wineberry, whortleberry and the like) and any' combination of them. In certain exemplary embodiments, fruit flavors are derived from citrus fruits including, but not limited to, orange, mandarin orange, tangerine, tangelo, pomelo, lemon, lime, grapefruit and any combination of them.

The supplementary amount of one or more fruit flavors provided to the food products described here may vary depending on the application (such as, e.g., to produce desirable high note flavors). The amount of one or more fruit flavors to be added will vary to suit a particular application and can be based, at least in part, on nutritional value, taste, shelf-life, efficacy levels approved, qualified health claims, and combinations thereof. In certain exemplary embodiments, a food product comprises from about 0.0001% to about 10% by weight fruit flavor. In certain exemplary embodiments, food product comprises from about 0.001% to about 1.0% by weight fruit flavor, from about 0.001% to about 0.5% by weight fruit flavor, from about 0.01% to about 0.5% by weight fruit flavor, or from about 0.04 to about 1.0% fruit flavor. Other amounts of fruit flavor are also contemplated depending on the particular fruit juice(s), fruit flavor(s) and/or food product(s) used and are within the scope of the invention.

The food products described here may include other nutritional ingredients. For example, short-chain omega-3 fatty acids such as alpha-linolenic acid (ALA), which are derived from micro-algae or other sources, omega-6 fatty acids, vitamins, minerals, or a combinations thereof may also be added to the product. Ingredients such as sweeteners, flavorings, colorings, thickeners, emulsifiers, acidulants, electrolytes, proteins, carbohydrates, preservatives and any combination thereof can also be added to the product, as desired.

The finished food product inluding at least one or more omega-3 fatty acids and a supplemental amount of one or more fruit flavors may have a shelf life of about 2-12 months and possibly up to 24 months under ambient conditions, depending on the level of processing the product undergoes, the type of packaging, and the materials used for packaging the product. In certain exemplary embodiments (e.g., a more lightly processed product), the finished product including at least one or more omega-3 fatty acids and a supplementary amount of one or more fruit flavors may have a shelf-life of about 12 weeks under refrigerated conditions. Additional factors that may affect the shelf-life of the product include, for example, the nature of the base formula (e.g., a beverage sweetened with sugar has a longer shelf-life than a beverage sweetened with aspartame) and environmental conditions (e.g., exposure to high temperatures and sunlight is deleterious to ready to drink (RTD) beverages).

In one aspect, the invention relates to a method for producing a food product. The method includes the steps of pre-processing to form an intermediate food product, adding a desired amount of omega-3 fatty acids to the intermediate food product, and mixing the intermediate food product to disperse the omega-3 fatty acids in the intermediate food product. Optionally, the method can include the steps of pasteurizing the intermediate food product to form a food product and post-processing the food product. Post-processing may include preparing the product for packaging. The intermediate food product could be a solution or a semi-solid or solid mixture. A supplemental amount of at least one fruit flavor can be added to the food product prior to pasteurization, after pasteurization, prior to mixing with the omega-3 fatty acid, and/or at the same time as the omega-3 fatty acid.

In another aspect, the invention relates to a food product including a product mixture and a desired amount of omega-3 fatty acids dispersed in the product mixture by mixing. In exemplary embodiments, the product mixture is pasteurized. The product mixture could be a solution or a semi-solid or solid mixture.

In various embodiments of the foregoing aspects, the adding step includes adding a powder to the intermediate food product by, for example, using a powder mixer. The mixing step can include dispersing the omega-3 fatty acids within the intermediate food product to form a substantially homogeneous blend using, for example, a high shear mixer. In addition, the desired amount of omeg-3 fatty acids is about 5-5000 milligrams per' serving of the food product. In a particular embodiment, the desired amount of omega-3 fatty acids is at least about 16 milligrams per serving of the food product. In other embodiments, the desired amount of omega-3 fatty acids is about 5-320 milligrams, preferably about 15-100 milligrams, and more preferably about 10-50 milligrams per serving of the food product. The omega-3 fatty acids can include eicosapentaenoic acid (EPA) and/or docosahexaenoic acid (DHA) in any combination. In exemplary embodiments, the omega-3 fatty acids include EPA and DHA in amounts of 55-65% EPA and 35-45% DHA, or in a ratio of about 60% EPA and about 40% DHA; however, it is possible to include only EPA or DHA in the food product.

Figure 1 shows a process 100 for forming a food product in accordance with one embodiment of the invention. At step 110, pre-processing is performed to provide an intermediate product. In certain exemplary embodiments, the intermediate product is used to form orange juice, such as used to form NFC orange juice. Providing an intermediate product used to form other juices or beverages, such as those listed hereinabove, is also contemplated and within the scope of the invention.

In certain exemplary embodiments, the pre-processing forms an intermediate food product just prior to pasteurization. Providing an intermediate food product at other stages of processing is also contemplated and within the scope of the invention. For example, the pre-processing can form an intermediate food product that requires additional processing prior to pasteurization. Various conventional techniques can be employed to form the intermediate food product. The preprocessing may vary depending on the application. In the case of NFC orange juice, this includes, for example, the addition of fortification or other additives and the lowering of the acidity levels of the juice, as disclosed in U.S. Patent Nos. 6,565,898, 6,682,767, and 6,761,915.

The intermediate food product can include various additional ingredients, such as vitamins, minerals, flavoring agents, sweeteners, coloring agents, other functional ingredients, stabilizers, pH adjusters, and any combination thereof as desired. Other additives, such as those described hereinabove, are also contemplated and within the scope of the invention. Generally, the ingredients can be added prior to pasteurization, prior to mixing with the omega-3 fatty acid, and/or at the same time as the omega-3 fatty acid. The ingredients can also be added post-pasteurization.

In certain exemplary embodiments, a desired amount of one or more omega-3 fatty acids and/or a supplementary amount of one or more fruit flavors is added to the intermediate food product at step 120. The amount of omega-3 fatty acids added, for example, is about 5-5000 mg per 8 fluid ounces (0.24 liters) serving. Other amounts may also be useful, for example, depending on the serving size and nutritional content. In certain exemplary embodiments, the omega-3 fatty acids in encapsulated or multi-encapsulated powder form are added to the intermediate food product. In another embodiment, the omega-3 fatty acids in encapsulated, multi-encapsulated slurry form, or as a free oil in a liquid form are added to the intermediate food product.

In certain exemplary embodiments, the one or more omega-3 fatty acids and/or a supplemental amount of one or more fruit flavors are added to the intermediate food product after or during mixing of the intermediate food product. In certain exemplary embodiments, high shear mixing is performed on the intermediate food product; however, other types of mixing are contemplated and within the scope of the invention, such as, for example, low energy/low shear mixing (e.g., stirring) and high energy/high shear mixing. The mixing can also be performed manually or as part of a batch process. Various types of high shear mixers can be employed. Typically, the high shear mixer includes rotatable blades enclosed in a housing. In certain exemplary embodiments, the intermediate food product is made by use of two mixers. The first is a powder mixer that allows for incorporation of the ingredients in the intermediate food product. The second is an in-line high shear mixer. Mixing should be accomplished so as not to destroy the encapsulation matrix, which might result in oxidation taking place. The mixer(s) can be selected for a specific application based, at least in part, on the type and amount of ingredients used, amount of product to be produced, and the flow rate. Generally, a commercially available mixer, such as those available from Invensys APV of Getzville, NY or Silverson Machines, Inc. of East Longmeadow, MA, may be used.

Many methods of incorporating the ingredients into the food product are available. In certain exemplary embodiments, powder addition (or mixing) and high shear mixing is used. The powder mixer consists of a mixer-housing made up of an upper and lower chamber. The upper chamber has inlet connections for liquid and powder and the lower chamber has a special mixing-impeller mounted on a stainless steel shaft. The mixer operates by adding the dry ingredients into the hopper using a butterfly valve that controls the flow of powder from the hopper and prevents air from entering into the mixer. The dry powder gets sucked into the mixer where the impeller incorporates the ingredient into the intermediate food product stream. After passing the powder mixer, the intermediate food product then enters the high shear mixer. As the product is driven through the blades, the flow is repeatedly sheared through the action of the rotating blades. The high shear mixing disperses the omega-3 fatty acids sufficiently in the intermediate food product.

At step 130, the intermediate food product with omega-3 fatty acids is typically pasteurized. In certain exemplary embodiments, pasteurization comprises pasteurizing the intermediate food product. The pasteurization process may include, for example, ultra high temperature (UHT) treatment and/or high temperature-short time (HTST) treatment. The UHT treatment includes subjecting the intermediate product solution to high temperatures, such as by direct steam injection or steam infusion, or by indirect heating in a heat exchanger. Generally, after the product is pasteurized, the product is optionally cooled as required by the particular product and/or the package filling application. For example, in certain exemplary embodiments, the intermediate product solution is subjected to heating to about 185°F (85°C) to about 270°F (132°C) for a short period of time, for example, about 1 to 30 seconds, then cooled quickly to about 36°F (2.2°C) +/10°F (5°C) for refrigerated products, to ambient temperature for shelf stable or refrigerated products, and to about 185°F (85°C) +/- 10°F (5°C) for hot-fill applications for shelf-stable products. The pasteurization process is typically conducted in a closed system, so as not to expose the food product to atmosphere or other possible sources of contamination. Other pasteurization or sterilization techniques may also be useful, such as, for example, aseptic or retort processing. In addition, multiple pasteurization processes may be carried out in series or parallel, as necessitated by the food product or ingredients.

After processing is completed, post-processing is performed at step 140; however, post-processing may include any process steps carried out after the addition of the omega-3 fatty acids to the product. Post-processing includes, for example, cooling the product solution and filling it into containers for packaging and shipping. In certain exemplary embodiments, post-processing may also include deaeration of the food product to less than 4.0 ppm oxygen, less than 2.0 ppm, or less than 1.0 ppm; however, deaeration and other "post-processing" tasks may be carried out prior to processing, prior to pasteurization, prior to mixing with the omega-3 fatty acid, and/or at the same time as mixing the omega-3 fatty acid. In addition, an inert gas (e.g., nitrogen) headspace may be maintained during intermediary processing of the product and final packaging. Additionally or alternatively, an oxygen barrier and/or oxygen scavengers could be used in the final packaging. It is also contemplated and within the scope of the invention to include the process step of homogenizing the food product.

As described in accordance with one embodiment of the invention, the omega-3 fatty acids are incorporated into the food product in an encapsulated or powder form and subjected to high shear mixing. When compared with conventional methods, such as, for example, incorporating such components in oil form, the present invention gives rise to several significant advantages. For example, emulsifier need not be added to stabilize the fish oils, and no homogenization step is required during processing. In addition, reduction in the number of processing steps results in less off-flavors from oxidation of the omega-3 fatty acids, producing a more palatable product with a longer shelf-life.

### EXAMPLES

The following examples are specific embodiments of the present invention, but are not intended to limit it.

### EXAMPLE I

### General Orange Juice Formula

**Table 1**

| **Components** | **PPM** | **% Weight** |
|---|---|---|
| **NFC Orange Juice** | 98,500 to 99,949 | 98.5% to 99.949% |
| **Omega**-**3 Powder** | 500 to 5000 | 0.05% to 0.5% |
| **Fruit Flavors** | | |
| **Folded Essential Oil** | 10 to 500 | 0.001% to 0.05 % |
| **Essential Oil** | 100 to 5000 | 0.01 % to 0.5% |
| **Aroma and Essence** | 400 to 10,000 | 0.04% to 1.0% |

### EXAMPLE 2

The following ingredients are mixed together to produce four samples of a reduced calorie orange juice beverage embodiment of the present invention:

| | Sample A | Sample B | Sample C | Sample D |
|---|---|---|---|---|
| Ingredients | % by Weight | % by Weight | % by Weight | % by Weight |
| Orange juice | 22.2400 | 22.2400 | 22.2400 | 22.2400 |
| Filtered water | 65.5280 | 61.4740 | 57.5400 | 53.4960 |
| Homogenized pulp | 7.6920 | 10.2560 | 12.7000 | 15.2540 |
| Pasteurized orange pulp | 3.6960 | 4.9280 | 6.1600 | 7.3920 |
| Rebaudioside A | 0.0120 | 0.0160 | 0.0200 | 0.0240 |
| Symrise number 196650 | 0.0600 | 0.0800 | 0.1000 | 0.1200 |
| Malic acid | 0.1080 | 0.1440 | 0.1800 | 0.2160 |
| Citric acid | 0.1080 | 0.1440 | 0.1800 | 0.2160 |
| Potassium citrate | 0.1260 | 0.1680 | 0.2100 | 0.2520 |
| Citrus flavor | 0.0180 | 0.0240 | 0.0300 | 0.0360 |
| Orange oil/tocopherol mixture | 0.0180 | 0.0240 | 0.0300 | 0.0360 |
| Beta carotene | 0.0120 | 0.0160 | 0.0200 | 0.0240 |
| Omega-3 ingredient (MEG3) | 0.1000 | 0.1100 | 0.1200 | 0.1300 |
| Vitamin mixture | 0.0480 | 0.0640 | 0.0800 | 0.0960 |
| Modified food starch | 0.2340 | 0.3120 | 0.3900 | 0.4680 |
| Total | 100.0000 | 100.0000 | 100.0000 | 100.0000 |

The invention may be embodied in other specific forms. The foregoing embodiments, therefore, are to be considered in all respects illustrative rather than limiting the invention described herein. The scope of the invention is thus indicated by the appended claims, rather than by the foregoing description, and all changes that come within the meaning and range of equivalency of the claims are intended to be embraced therein.

Given the benefit of the above disclosure and description of exemplary embodiments, it will be apparent to those skilled in the art that numerous alternative and different embodiments are possible in keeping with the general principles of the invention disclosed here. The-appended claims are intended to cover all such modifications and alternative embodiments. It should be understood that the use of a singular indefinite or definite article (e.g., "a," "an," "the," etc.) in this disclosure and in the following claims follows the traditional approach in patents of meaning "at least one" unless in a particular instance it is clear from context that the term is intended in that particular instance to mean specifically one and only one. Likewise, the term "comprising" is open ended, not excluding additional items, features, components, etc.

## Claims

1. A food product comprising:
an NFC fruit juice;
at least one omega-3 fatty acid; and
a supplemental amount of at least one fruit flavor comprising:
an essential fruit oil; and
different from the essential fruit oil, at least one of a fruit fraction, a fruit component, a fruit extract, a fruit aroma, or a fruit essence.

2. The food product of claim 1, wherein the NFC fruit juice comprises at least one of a citrus juice, a non-citrus juice, and a juice cocktail.

3. The food product of claim 2 wherein the fruit juice comprises:
citrus juice comprising juice from one or more of an orange, mandarin orange, tangerine, tangelo, pomelo, lemon, lime, and grapefruit;
or
non-citrus juice comprising juice from one or more of an apple, peach, nectarine, plum, prune, pineapple, banana, pomegranate, blackberry, blueberry, boysenberry, cherry, cranberry, currant, date, grape, gooseberry, huckleberry, mulberry, raspberry, and strawberry.

4. The food product of claim 1, wherein the at least one fruit flavor is derived from the same fruit as the NFC fruit juice, or
wherein the at least one fruit flavor comprises one or more of orange flavor, mandarin orange flavor, tangerine flavor, tangelo flavor, pomelo flavor, lemon flavor, lime flavor, grapefruit flavor, apple flavor, peach flavor, nectarine flavor, plum flavor, prune flavor, pineapple flavor, banana flavor, pomegranate flavor, blackberry flavor, blueberry flavor, boysenberry flavor, cherry flavor, cranberry flavor, currant flavor, date flavor, grape flavor, gooseberry flavor, huckleberry flavor, mulberry flavor, raspberry flavor, and strawberry flavor.

5. The food product of claim 1, wherein:
the NFC juice consists essentially of orange juice; and
the at least one fruit flavor is orange flavor.

6. The food product of claim 1, wherein the at least one fruit flavor is present in an amount of approximately about 0.001% to about 1.0% by weight.

7. The food product of claim 1, wherein the NFC fruit juice, the at least one omega-3 fatty acid and the at least one fruit flavor are present as a substantially homogeneous blend, or
wherein the at least one omega-3 fatty acid is present in an amount from about 5 to about 5000 milligrams per 237 milliliter ounce serving of the fruit juice.

8. The food product of claim 1, wherein the at least one omega-3 fatty acid comprises both eicosapentaenoic acid (EPA) and docosahexaenoic acid (DHA) in amounts of 55-65% EPA and 35-45% DHA.

9. The food product of claim 1, wherein the at least one omega-3 fatty acid is encapsulated, preferably
wherein the at least one encapsulated omega-3 fatty acid is multi-encapsulated, more preferably
wherein the at least one multi-encapsulated omega-3 fatty acid remains substantially intact upon pasteurization, or
wherein the at least one multi-encapsulated omega-3 fatty acid remains substantially intact at a pH of less than about 6.0.

10. The food product of claim 9, wherein the at least one multi-encapsulated omega-3 fatty acid remains substantially intact when exposed to shear at a shear rate of between about 1.0 sec⁻¹ and about 100,000 sec⁻¹.

11. The food product of claim 1, wherein the food product is a reduced calorie beverage, a light beverage, pr a low calorie beverage.

## Patentansprüche

1. Lebensmittelprodukt, das aufweist:
einen Fruchtsaft nicht aus Konzentrat;
wenigstens eine Omega-3-Fettsäure; und
eine Zusatzmenge wenigstens eines Fruchtgeschmacksstoffs, der aufweist:
ein etherisches Fruchtöl; und
im Unterschied zu dem etherischen Fruchtöl, mindestens einen Fruchtanteil, einen Fruchtbestandteil, einen Fruchtextrakt, ein Fruchtaroma oder eine Fruchtessenz.

2. Lebensmittelprodukt nach Anspruch 1, wobei der Fruchtsaft nicht aus Konzentrat mindestens einen Zitrussaft, einen Nicht-Zitrussaft oder einen Saftcocktail aufweist.

3. Lebensmittelprodukt nach Anspruch 2, wobei der Fruchtsaft aufweist:
Zitrussaft, der Saft aus einem oder mehreren der Folgenden aufweist: Orange, Mandarinorange, Mandarine, Minneola, Pomelo, Zitrone, Limette und Grapefruit oder
Nicht-Zitrussaft, der Saft aus einem oder mehreren der Folgenden aufweist:
Apfel, Pfirsich, Nektarine, Pflaume, Zwetschge, Ananas, Banane, Granatapfel, Brombeere, Blaubeere, Boysenbeere, Kirsche, Moosbeere, Johannisbeere, Dattel, Traube, Stachelbeere, amerikanische Heidelbeere, Maulbeere, Himbeere und Erdbeere.

4. Lebensmittelprodukt kann Anspruch 1, wobei der wenigstens eine Fruchtgeschmacksstoff von der gleichen Frucht wie der Fruchtsaft nicht aus Konzentrat stammt, oder
wobei der wenigstens eine Fruchtgeschmacksstoff einen oder mehrere der Folgenden aufweist: Orangengeschmacksstoff, Mandarinorangengeschmacksstoff, Mandarinengeschmacksstoff, Minneolageschmacksstoff, Pomelogeschmacksstoff, Zitronengeschmacksstoff,
Limettengeschmacksstoff, Grapefruitgeschmacksstoff, Apfelgeschmacksstoff, Pfirsichgeschmacksstoff, Nektarinengeschmacksstoff, Pflaumengeschmacksstoff, Zwetschgengeschmacksstoff, Ananasgeschmacksstoff, Bananengeschmacksstoff, Granatapfelgeschmacksstoff, Brombeergeschmacksstoff, Blaubeergeschmacksstoff, Boysenbeerengeschmacksstoff, Kirschgeschmacksstoff, Moosbeerengeschmacksstoff, Johannisbeergeschmacksstoff, Dattelgeschmacksstoff, Traubengeschmacksstoff, Stachelbeergeschmacksstoff, amerikanischer Heidelbeergeschmacksstoff, Maulbeergeschmacksstoff, Himbeergeschmacksstoff und Erdbeergeschmacksstoff.

5. Lebensmittelprodukt nach Anspruch 1, wobei:
der Saft nicht aus Konzentrat im Wesentlichen aus Orangensaft besteht; und
der wenigstens eine Fruchtgeschmacksstoff Orangengeschmacksstoff ist.

6. Lebensmittelprodukt nach Anspruch 1, wobei der wenigstens eine Fruchtgeschmacksstoff in einer Menge von ungefähr etwa 0,001% bis etwa 1,0 Gewichts-% vorhanden ist.

7. Lebensmittelprodukt nach Anspruch 1, wobei der Saft nicht aus Konzentrat, die wenigstens eine Omega-3-Fettsäure und der wenigstens eine Fruchtgeschmacksstoff als eine im Wesentlichen homogene Mischung vorhanden sind, oder
wobei die wenigstens eine Omega-3-Fettsäure in einer Menge von etwa 5 bis etwa 5000 Milligramm pro 237 Milliliter-Portionsquantum des Fruchtsafts vorhanden ist.

8. Lebensmittelprodukt nach Anspruch 1, wobei die wenigstens eine Omega-3-Fettsäure Eicosapentaensäure (EPA) und Docosahexaensäure (DHA) in Mengen von 55 - 65% EPA und 34 - 45% DHA aufweist.

9. Lebensmittelprodukt nach Anspruch 1, wobei die wenigstens eine Omega-3-Fettsäure verkapselt ist,
wobei vorzugsweise die wenigstens eine verkapselte Omega-3-Fettsäure noch besser mehrfach verkapselt ist,
wobei vorzugsweise die wenigstens eine verkapselte Omega-3-Fettsäure nach der Pasteurisierung intakt bleibt oder
die wenigstens eine verkapselte Omega-3-Fettsäure bei einem pH-Wert von weniger als etwa 6,0 im Wesentlichen intakt bleibt.

10. Lebensmittelprodukt nach Anspruch 9, wobei die wenigstens eine mehrfach verkapselte Omega-3-Fettsäure im Wesentlichen intakt bleibt, wenn sie einer Schergeschwindigkeit zwischen etwa 1,0 s⁻¹ und etwa 100 000 s⁻¹ ausgesetzt wird.

11. Lebensmittelprodukt nach Anspruch 1, wobei das Lebensmittelprodukt ein kalorienreduziertes Getränk, ein leichtes Getränk oder ein kalorienarmes Getränk ist.

## Revendications

1. Produit alimentaire comprenant :
un jus de fruit non fait à partir de concentré (NFC) ;
au moins un acide gras oméga-3 ; et
une quantité supplémentaire d'au moins un parfum de fruit comprenant :
une huile essentielle de fruit ; et
au moins l'un parmi une fraction de fruit, un composant de fruit, un extrait de fruit, un arôme de fruit, ou une essence de fruit, différent de l'huile essentielle de fruit.

2. Produit alimentaire selon la revendication 1, dans lequel le jus de fruit NFC comprend au moins l'un parmi un jus d'agrume, un jus d'un fruit non agrume, et un cocktail de jus.

3. Produit alimentaire selon la revendication 2, dans lequel le jus de fruit comprend :
un jus d'agrume comprenant le jus d'un ou de plusieurs parmi l'orange, la mandarine, la tangerine, le tangelo, le pomélo, le citron, le citron vert, et le pamplemousse ;
ou
un jus d'un fruit non agrume comprenant le jus d'un ou de plusieurs parmi la pomme, la pêche, la nectarine, la prune, le pruneau, l'ananas, la banane, la grenade, la mûre sauvage, le bleuet, la mûre de Boysen, la cerise, la canneberge, la groseille, la datte, le raisin, la groseille à maquereau, la myrtille, la mûre, la framboise, et la fraise.

4. Produit alimentaire selon la revendication 1, dans lequel l'au moins un parfum de fruit dérive du même fruit que le jus de fruit NFC, ou
dans lequel l'au moins un parfum de fruit comprend un ou plusieurs parmi le parfum d'orange, le parfum de mandarine, le parfum de tangerine, le parfum de tangelo, le parfum de pomelo, le parfum de citron, le parfum de citron vert, le parfum de pamplemousse, le parfum de pomme, le parfum de pêche, le parfum de nectarine, le parfum de prune, le parfum de pruneau, le parfum d'ananas, le parfum de banane, le parfum de grenade, le parfum de mûre sauvage, le parfum de bleuet, le parfum de mûre de Boysen, le parfum de cerise, le parfum de canneberge, le parfum de groseille, le parfum de datte, le parfum de raisin, le parfum de groseille à maquereau, le parfum de myrtille, le parfum de mûre, le parfum de framboise, et le parfum de fraise.

5. Produit alimentaire selon la revendication 1, dans lequel :
le jus NFC est constitué essentiellement de jus d'orange ; et
l'au moins un parfum de fruit est le parfum d'orange.

6. Produit alimentaire selon la revendication 1, dans lequel l'au moins un parfum de fruit est présent en une quantité d'environ 0,001 % à environ 1,0 % en poids.

7. Produit alimentaire selon la revendication 1, dans lequel le jus de fruit NFC, l'au moins un acide gras oméga-3 et l'au moins un parfum de fruit sont présents sous la forme d'un mélange pratiquement homogène, ou
dans lequel l'au moins un acide gras oméga-3 est présent en une quantité d'environ 5 à environ 5000 milligrammes par portion de 237 millilitres (1 once) du jus de fruit.

8. Produit alimentaire selon la revendication 1, dans lequel l'au moins un acide gras oméga-3 comprend à la fois de l'acide éicosapenténoïque (EPA) et de l'acide docosahexénoïque (DHA) en des quantités de 55 à 65 % d'EPA et de 35 à 45 % de DHA.

9. Produit alimentaire selon la revendication 1, dans lequel l'au moins un acide gras oméga-3 est encapsulé,
de préférence dans lequel l'au moins un acide gras oméga-3 encapsulé est multi-encapsulé,
mieux encore
dans lequel l'au moins un acide gras oméga-3 multi-encapsulé reste pratiquement intact suite à une pasteurisation, ou
dans lequel l'au moins un acide gras oméga-3 multi-encapsulé reste pratiquement intact à un pH inférieur à environ 6,0.

10. Produit alimentaire selon la revendication 9, dans lequel l'au moins un acide gras oméga-3 multi-encapsulé reste pratiquement intact quand il est exposé à un cisaillement à une vitesse de cisaillement comprise entre environ 1,0 s⁻¹ et environ 100 000 s⁻¹.

11. Produit alimentaire selon la revendication 1, lequel produit alimentaire est une boisson à teneur réduite en calories, une boisson légère, ou une boisson à faible teneur en calories.
